Europäisches Patentamt

European Patent Office

Office européen des brevets

(11) Publication number: **0 253 934**
A1

# EUROPEAN PATENT APPLICATION

(21) Application number: 86305716.2

(22) Date of filing: 25.07.86

(51) Int. Cl.⁴: **B65H 63/06** , C04B 35/48

(43) Date of publication of application:
27.01.88 Bulletin 88/04

(84) Designated Contracting States:
CH DE FR GB IT LI

(71) Applicant: TORAY INDUSTRIES, INC.
2, Nihonbashi-Muromachi 2-chome Chuo-ku
Tokyo 103(JP)

(72) Inventor: Oba, Akira
859-4, Sakamoto Honmachi
Otsu-shi Shiga-ken 520-01(JP)
Inventor: Kida, Chikatoshi
397-7, Kibukawa Minakuchi-cho
Koka-gun Shiga-ken, 529-17(JP)

(74) Representative: Coleiro, Raymond et al
MEWBURN ELLIS & CO. 2/3 Cursitor Street
London EC4A 1BQ(GB)

(54) Slub eliminator.

(57) A slub eliminator to be used in the textile industry includes a cutting means (16) having a cutting blade (20,40,51) and a blade receiving member (19,52) which are provided so as to allow a collision and an estrangement therebetween. The cutting blade (20,40,51) comprises zirconia ceramics containing at least 50 mol% zirconia having a tetragonal crystal structure which has an action of relaxing stress due to a stress inductive transformation mechanism. A roundness is provided at a cutting edge (20,40a) of the cutting blade (20,40,51). According to the construction, the mechanical features of the cutting blade, particularly strength, toughness and abrasion resistance, are greatly increased, the initial sharpness for cutting thereof is not only increased but even deterioration of the sharpness during its use is very small, and the span of life of the cutting means (16) is increased greatly.

FIG. 3

## SLUB ELIMINATOR

The present invention relates to a slub eliminator, more particularly to a device for detecting a slub in a yarn, cutting the yarn and thereby eliminating a portion of the yarn having the slub.

A slub eliminator used in the textile industry is a device for detecting a slub (a slub is a soft, thick, uneven portion of a yarn and can become a defect in the yarn) in a running yarn and eliminating the slub portion from the yarn by cutting the yarn. Accordingly, the device usually has a detecting means for detecting a slub in a running yarn and a cutting means for cutting the yarn and thereby eliminating the slub portion from the yarn. Such a slub eliminator is often called as a slub catcher.

In the slub eliminator, the slub portion is eliminated from the yarn by cutting rapidly the yarn running at a high speed. Therefore, the cutting means of the slub eliminator does not adopt a mechanism utilizing a shearing force such as that utilized by scissors, but adopts a so-called hand cutter type mechanism which causes a violent collision between a cutting blade and a blade receiving member provided on respective opposite sides of a yarn path of the yarn. In the conventional technology, the cutting blade is constructed from a high-speed steel and the blade receiving member is constructed from a mild steel.

However, in the cutting means utilizing the combination of the above materials, there is a problem that abrasion of the cutting blade occurs in only a short period of time thereby causing the sharpness of the blade to be impaired, although initial sharpness thereof is good. Namely the span of life of the blade is short. Therefore, the cutting blade must be replaced by a new one frequently. In order to replace the cutting blade, it is required to stop the machine though the stoppage is temporary. It is also required to prepare many blades for the exchange.

An object of the present invention is to provide a slub eliminator having a cutting means in which not only initial sharpness for cutting is excellent but in which the initial sharpness can be maintained over a long period of time, thereby securing a long span of life, so that it is necessary only rarely to stop the machine for the exchange of cutting blades and so that fewer blades are required over a given period of time.

To accomplish the above objects, a slub eliminator according to the present invention includes:

(a) a detecting means for detecting a slub in a running yarn; and

(b) a cutting means for cutting the yarn in response to a signal from the detecting means, the cutting means comprising:

(b-1) a cutting blade provided on one side of a yarn path of the yarn, at least a cutting edge portion of which blade is constructed from ceramics, the ceramics being zirconia ceramics containing at least 50 mol% zirconia having a tetragonal crystal structure, the blade having a cutting edge comprising a rounded portion,

(b-2) a blade receiving member provided on the other side of the yarn path so as to oppose the cutting blade, and

(b-3) a drive means for driving at least one of the cutting blade and the blade receiving member relatively to the other so as to cause collision between the cutting blade and the blade receiving member to cut the yarn or estrangement of the cutting blade from the blade receiving member to allow passage of the yarn through the slub eliminator.

A slub eliminator of the present invention may operate in such a way that when a slub in a yarn is detected by detecting means upstream of the cutting means along the yarn path, the cutting means operates immediately, the cutting blade and the blade receiving member colliding with each other whereby the yarn running through the position between the cutting blade and the blade receiving member is cut before the slub itself reaches the cutting means, and the slub portion of the yarn is eliminated.

The detecting means preferaby comprises an optical device including an emitter emitting a light and a receiver receiving the light from the emitter.

The zirconia ceramics constituting the cutting blade are ceramics comprising a zirconia having a crystal structure of a tetragonal configuration at room temperature (hereunder called "tetragonal zirconia"), or zirconia ceramics containing the tetragonal zirconia to an extent of at least 50 mol%, preferably at least 70 mol%, more preferably at least 90 mol%. That is, the zirconia ceramics constituting the cutting blade is a zirconia ceramics containing at least 50 mol% tetragonal zirconia. The most preferable ceramics for the cutting blade is zirconia ceramics consisting of substantially only tetragonal zirconia.

The zirconia ceramics desirably has a porosity of not greater than 2%. More desirably the zirconia ceramics has a porosity of not greater than 0.5%.

Moreover, the zirconia ceramics desirably has an average crystal grain size of 0.1 - 5$\mu$m. A more desirable average crystal grain size of the zirconia ceramics is within the range of 0.2 - 1$\mu$m.

The above zirconia ceramics may be obtained by sintering powdered raw material which has been formed as a solid solution of zirconia with 1.5 - 5 mol% yttria or 4 - 9 mol% calcia as a stabilizer, under controlled conditions.

The cutting blade has a thickness of desirably 0.3 - 3 mm and its cutting edge has a rounded portion. The radius of curvature of the rounded portion is designed preferably in the range of 0.03 - 2 mm. More preferably the radius of curvature of the rounded portion is 0.1 - 1 mm.

The cutting blade constructed as described above can have an excellent initial sharpness, and can have a long span of life and thereby scarcely require any exchange. Therefore, it is almost unnecessary to stop the machine for the exchange of the blades and also almost unnecessary to prepare further cutting blades for the exchange.

The above and other objects, features and advantages of the present invention will become apparent and more readily appreciated from the following detailed description of the preferred exemplary embodiments of the invention, taken in conjunction with the accompanying drawings, in which:

Figure 1 is a schematic perspective view of a yarn winder using a slub eliminator according to an embodiment of the present invention;

Figure 2 is an enlarged schematic perspective view of the slub eliminator shown in Fig. 1;

Figure 3 is a partial side view of the slub eliminator shown in Fig. 2, partly cut away;

Figure 4 is a exploded perspective view of the slub eliminator shown in Fig. 3;

Figure 5 is a block diagram showing a control system of the slub eliminator shown in Fig. 2;

Figure 6 is an enlarged schematic side view of a tip portion of a cutting blade of the slub eliminator shown in Fig. 4;

Figure 7 is a schematic side view of a tip portion of a cutting blade of a slub eliminator according to another embodiment of the present invention; and

Figure 8 is a schematic vertical sectional view of a slub eliminator according to a further embodiment of the present invention.

Some preferred embodiments of the present invention will be described hereunder referring to the attached drawings.

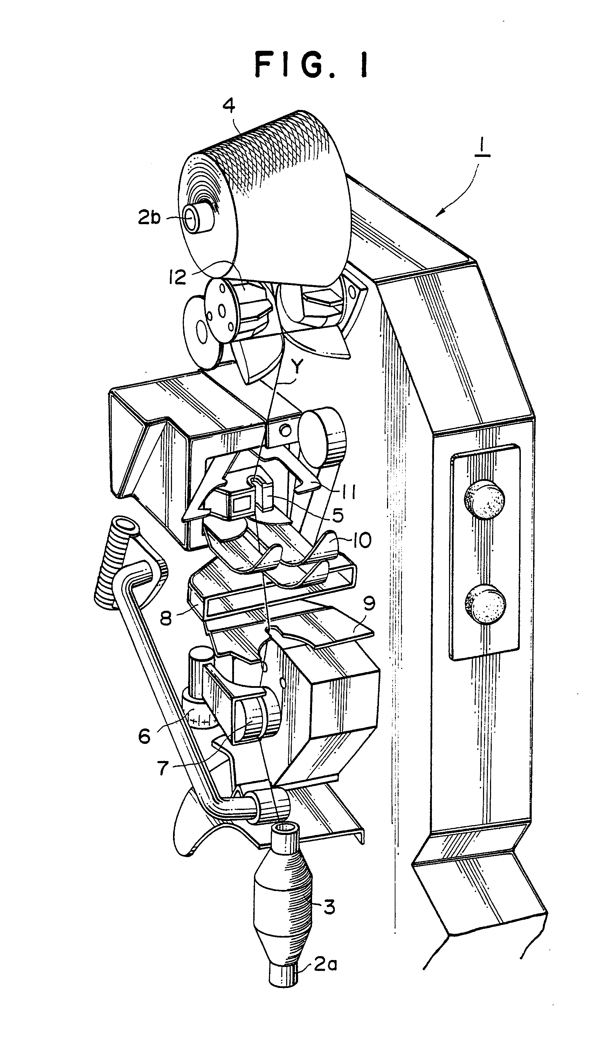

A yarn winder 1 shown in Fig. 1 is an apparatus for unwinding a yarn Y at a high speed from a package 3 (previously formed by winding the yarn Y on a bobbin 2a) and winding the yarn Y on a bobbin 2b thereby forming a cheese 4. In the yarn winder 1, a slub eliminator 5 having a detecting means and a cutting means is assembled.

The yarn Y unwound from the package 3 is passed through a guide 9 and a lower guide 10 of a thread handler, being given a constant tension by a tensioning device 7 having a tension controlling mechanism 6, and then passed through the slub eliminator 5. After leaving the slub eliminator 5 the yarn Y is passed through an upper guide 11 of the thread handler, and then wound on the bobbin 2b. The yarn is provided with a traversing motion by a traverse cam 12, and thereby wound as the cheese 4. If there is a slub in the running yarn Y, the slub eliminator 5 detects the slub and cuts the yarn Y before the slub passes through the slub eliminator. Accordingly, any yarn having a slub is not wound on the bobbin 2b.

A yarn aspirator 8 opens between the guide 9 and the lower guide 10 of the thread handler. Therefore, when the slub eliminator 5 cuts the yarn Y, the end portion of the cut yarn Y is drawn up into the yarn aspirator 8 as a waste yarn.

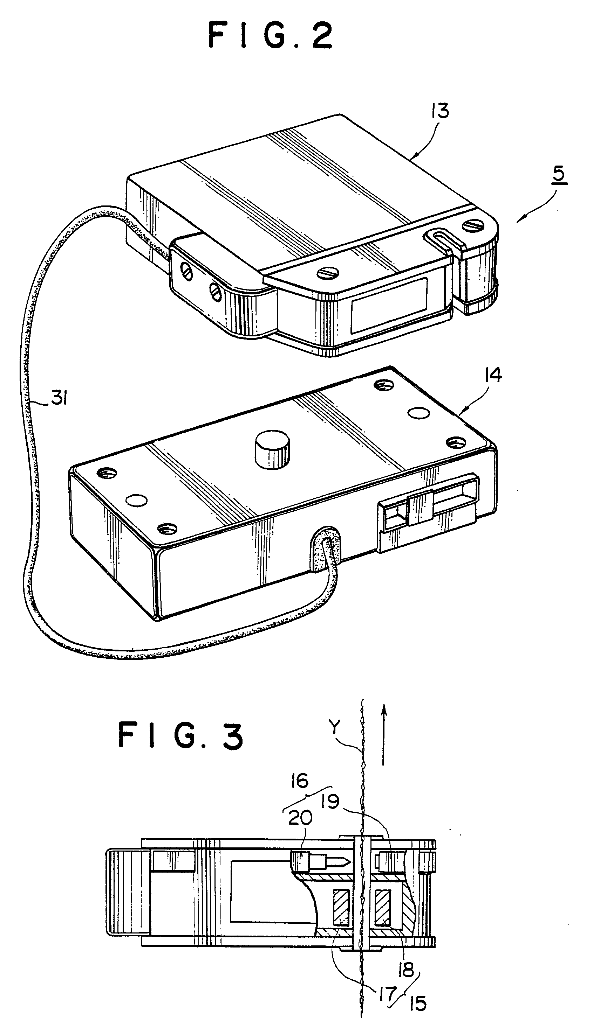

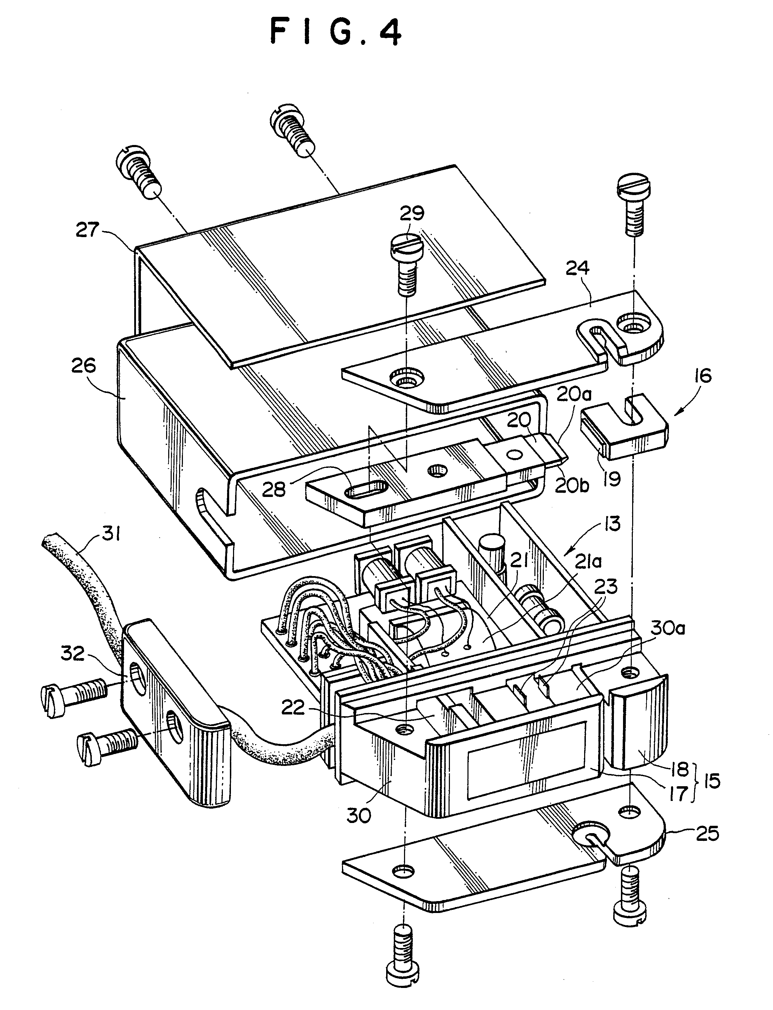

As shown in Fig. 2, the slub eliminator 5 has an actuating unit 13 and a control unit 14. As shown in Figs. 3 and 4, the slub eliminator 5 includes a detecting means 15 provided at an upstream position in the slub eliminator 5 in the running direction of the yarn Y and for detecting a slub in the running yarn Y, and a cutting means 16 provided downstream of the detecting means 15 in the running direction of the yarn Y and for cutting the yarn Y. The detecting means 15 has an emitter 17 emitting a light toward the yarn Y and a receiver 18 receiving the light from the emitter 17.

The cutting means 16 has a cutting blade 20 provided on the one side of a yarn path of the yarn Y, a blade receiving member 19 provided on the other side of the yarn path so as to oppose the cutting blade 20, and a drive means 21 connected to the cutting blade 20 and for driving the cutting blade 20 so as to cause a collision or an estrangement between a cutting edge comprising a rounded portion 20a, hereinafter called "a knife edge" of the cutting blade 20 and the blade receiving member 19 fixed in the slub eliminator 5. The drive means 21 has a solenoid 21a. The action of the solenoid 21a is transmitted to the cutting blade via a movable element 22 engaging with the cutting blade 20. By the transmission, the cutting blade 20 is pushed and the knife edge 20a thereof collides with the blade receiving member 19. The drive means 21 also has a plate spring 23 engaging with the cutting blade 20, and by this plate spring 23 the cutting blade 20 is urged away, and thereby estranged, from the blade receiving member 19 after the above collision. Namely, the cutting blade 20 is returned to the former position by the plate spring 23 when the solenoid 21a is switched off by the detecting means 15. Numerals 24 and 25 show covers, numeral 26 shows a case and numeral 27 shows a supporting bracket. The above motion regarding the collision and the estrangement of the cutting blade 20 can be realized by forming a slotted hole 28 on the cutting blade 20, inserting a screw 29 through the slotted hole 28, and supporting the cutting blade 20 slidably between an upper surface 30a of a body 30 in which the emitter 17 is built and the cover 24.

The leads for the solenoid 21a, the emitter 17 and the receiver 18 built in the actuating unit 13 are housed in one cable 31, and the cable 31 is taken out through a cable supporting cover 32. This cable 31 connects the actuating unit 13 with the control unit 14 as shown in Fig. 2.

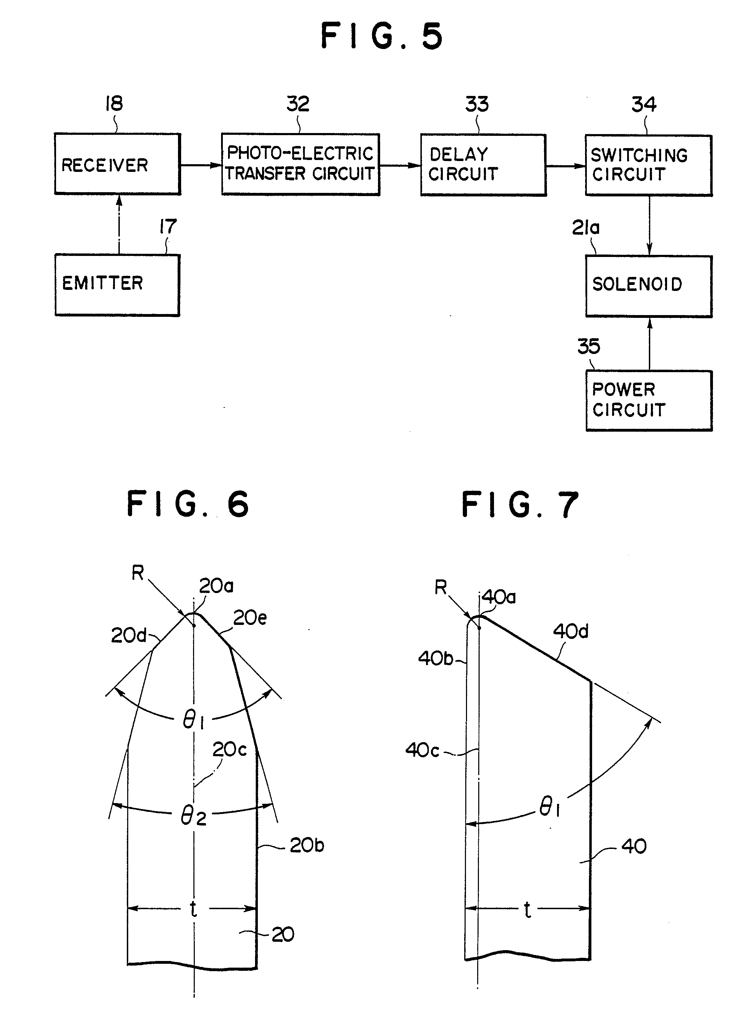

The cutting means 16 is controlled as shown in Fig. 5. A light is always projected from the emitter 17 toward the yarn Y. When there is a slub in the running yarn Y, a change in luminous energy of the incident light to the receiver 18 occurs as a result. The existence of the slub is detected by detecting the change in luminous energy. After having detected the existence of the slub, the detecting signal is sent to a photo-electric transfer circuit 32 and converted to an electrical signal therein. Moreover, the electrical signal is sent to a switching circuit 34 connected to a power circuit 35 through a delay circuit 33. By this system, the solenoid 21a is switched on before the slub reaches the cutting means 16, and the cutting blade 20 is thereby urged toward the blade receiving member 19 via the movable element 22 against a force working in the estrangement direction away from the blade receiving member 19 due to the plate spring 23. This causes the cutting blade 20 to collide with the blade receiving member 19 violently. The yarn Y is cut by this collision. After that, when the solenoid 21a is switched off, the cutting blade 20 is returned to the former position by the plate spring 23.

In the cutting means, the blade receiving member 19 is usually constructed of a metal. A preferable metal is a mild steel. As compared with that, the cutting blade 20, or at least a tip portion 20b having the knife edge 20a, is constructed from zirconia ceramics.

As shown in Fig. 6, the cutting blade 20 preferably has a thickness t of 0.3 - 3 mm, and preferably constitutes a double sloped type blade having a first pair of inclined edge portions defining slopes 20d and 20e positioned on both sides of the knife edge 20a. The angle between the slope 20d and an axis 20c of the cutting blade 20 is equal to the angle between the slope 20e and the axis 20c. The slopes 20d and 20e together define a tool angle $\theta_1$. The knife edge 20a is provided with a roundness having the radius of curvature R, and has an angle of run off $\theta_2$ (also called the second angle) defined by a second pair of inclined edge portions provided on a part of the cutting blade 20 behind the slopes 20d and 20e. Although the initial sharpness of the knife edge 20a for cutting the yarn Y increases as the above radius of curvature R decreases, the preferable range of the radius of curvature R is 0.03 - 2 mm because the knife edge 20a is liable to abrade when the radius of curvature R is too small. More preferably the range of the radius of curvature R is 0.1 - 1mm. For a similar reason, the tool angle $\theta_1$ is preferably designed within 20 - 170°. The more preferable tool angle $\theta_1$ is 60 - 120°. The second angle $\theta_2$ is not always necessary. However, when the thickness t of the cutting blade 20 is larger, the machining of the knife edge 20a becomes easier by providing the second angle $\theta_2$.

As an alternative to the double sloped type blade described above, the cutting blade may be formed as a single sloped type blade 40 shown in Fig. 7. In the cutting blade 40, a blade edge 40b on one side of a knife edge 40a is formed parallel to an axis 40c of the cutting blade 40 and another edge 40d is inclined to the axis 40c so as to define a tool angle $\theta_1$. However, a span of life of this single sloped type cutting blade is shorter than that of the double sloped type cutting blade shown in Fig. 6. In the single sloped type cutting blade, the thickness of the cutting blade may also be 0.3 - 3 mm. A preferable range of the tool angle $\theta_1$ is 20 - 70°. Moreover, a second angle may be provided corresponding to requirements.

The zirconia ceramics constituting at least a tip portion of the cutting blade is desirably ceramics comprising a zirconia having only a crystal structure of a tetragonal configuration (hereunder called tetragonal zirconia). However, it is difficult, on manufacturing, to obtain zirconia ceramics consisting of completely only tetragonal zirconia. Thus, even if it is intended to obtain such zirconia ceramics, usually a zirconia having a crystal structure of a cubic configuration (hereunder called cubic zirconia) and a zirconia having a crystal structure of a monoclinic configuration (hereunder called monoclinic zirconia) remain in the manufactured ceramics. However, as long as the content of the remaining cubic and monoclinic zirconia is small, the ceramics can be considered to be zirconia ceramics consisting substantially of only tetragonal zirconia.

In a slub eliminator of the present invention, a cutting blade can be used which is of a ceramics which contains tetragonal zirconia to an extent of at least 50 mol%, preferably not less than 70 mol%, more preferably not less than 90 mol% and in which the rest is cubic zirconia and/or monoclinic zirconia. Thus, even though the effect resulting from using the zirconia ceramics containing at least 50 mol% tetragonal zirconia cannot be expected to be the same as the effect resulting from using the aforementioned zirconia ceramics consisting of only tetragonal zirconia, the objects of the present invention can be accomplished even by using the former zirconia ceramics.

The zirconia ceramics desirably comprises ceramics from which monoclinic zirconia is substantially absent. Here, monoclinic zirconia may be regarded as being "substantially absent" from a zirconia ceramics if the zirconia ceramics contains not more than 10 mol% monoclinic zirconia.

The reason why a slub eliminator in accordance with the present invention requires the cutting blade to be constructed from zirconia ceramics containing at least 50 mol% tetragonal zirconia can be explained as follows.

Such zirconia ceramics are strengthened by a transformation of the crystal structure from the tetragonal to the monoclinic system when the zirconia ceramics receives a mechanical stress. This action is called a "stress inductive transformation mechanism". The stress inductive transformation mechanism relaxes a stress added to the zirconia ceramics by the energy required for the transformation from tetragonal zirconia to monoclinic zirconia. Therefore, the zirconia ceramics reveals highly desirable mechanical features, particularly as regards strength and toughness. Increasing of strength also means increasing of abrasion resistance. This increase is very desirable for a material of the cutting blade.

In other words, by using the above zirconia ceramics, the cutting blade. has mechanical features of a highly desirable nature, especially high strength, high toughness and high abrasion resistance. Therefore, by the high-level mechanical features together with the roundness at the knife edge without providing particularly sharp-edged portions, troubles such as nicking and abrasion of the knife edge can be suppressed, even if the cutting blade collides violently with the blade receiving member repeatedly. As a result, initial sharpness for cutting of the cutting blade can be maintained over a long period of time thereby securing a long span of life thereof.

On the other hand, cubic zirconia and monoclinic zirconia do not have such a stress inductive transformation mechanism as tetragonal zirconia has. As the amount of tetragonal zirconia becomes smaller relative to the amount of cubic and/or monoclinic zirconia, the effect of increasing mechanical features of the cutting blade due to tetragonal zirconia is decreased.

Moreover, if the zirconia ceramics contains too much monoclinic zirconia, microcracks accompanied by the transformation from tetragonal zirconia to monoclinic zirconia occur around or near to the monoclinic zirconia. When such zirconia ceramics receive an external force, particularly a shock force, a breakage developing from the microcrack sometimes occurs. Accordingly, to use zirconia ceramics containing substantially no monoclinic zirconia is desirable.

In the above , the amount of tetragonal zirconia is determined and defined as follows.

The polished surface of the cutting blade is subjected to an X-ray diffraction method using an autographic type X-ray diffraction recorder having a Geiger counter, and whereby diffraction patterns of the 400 surface of cubic zirconia, the 004 surface of tetragonal zirconia and the 400 surface of tetragonal zirconia are recorded on the chart.

Next, an area intensity on the diffraction pattern of the 400 surface of cubic zirconia is determined from the chart, the area intensity is divided by Lorentz factor L using a diffraction angle $\theta$ of the 400 surface of cubic zirconia read from the chart ($L - (1 + \cos^2\theta)/(\sin^2\theta \times \cos\theta)$), and then a diffraction intensity $I_{C400}$ of the 400 surface of cubic zirconia is obtained. Similarly, a diffraction intensity $I_{T004}$ of the 004 surface of tetragonal zirconia and a diffraction intensity $I_{T400}$ of the 400 surface of tetragonal zirconia are determined. Then the amount of tetragonal zirconia is calculated from the following equation using the above data.

$$C_T = ((I_{T004} + I_{T400}) / (I_{C400} + I_{T004} + I_{T400})) \times 100$$

wherein,

$C_T$ is the amount of tetragonal zirconia (mol%).

The amount of monoclinic zirconia is also determined in a similar manner by the following equation.

$$C_M = ((T_{M111} + I_{M111}) / (I_{T111} + I_{M111} + I_{M11\bar{1}})) \times 100$$

wherein,

$C_M$ is the amount of monoclinic zirconia (mol%),

$I_{T111}$ is the diffraction intensity of the 111 surface of tetragonal zirconia,

$I_{M111}$ is the diffraction intensity of the 111 surface of monoclinic zirconia,

$I_{M11\bar{1}}$ is the diffraction intensity of the 11$\bar{1}$ surface of monoclinic zirconia.

If the amounts of tetragonal zirconia and monoclinic zirconia are determined by the above equations, the remainder is cubic zirconia.

To obtain a cutting blade having more highly desirable mechanical features, the zirconia ceramics desirably has a porosity of not greater than 2%. A more desirable porosity of the zirconia ceramics is not greater than 0.5%. The porosity is defined by the following equation.

$$P = (1 - (\text{a true density} / \text{a theoretical density})) \times 100$$

wherein, P is porosity (%).

Moreover, the zirconia ceramics desirably has an average crystal grain size of 0.2 - 1 μm. More desirably, the average crystal grain size is 0.3 - 0.5 μm. By using such zirconia ceramics having a fine polymorph, a cutting blade having more highly desirable mechanical features can be obtained.

The above zirconia ceramics may be obtained by sintering powdered raw material which has been formed as a solid solution of zirconia with a stabilizer such as yttria, calcia or magnesia, under controlled conditions. Among the stabilizers, yttria and calcia are preferable because zirconia ceramics using them can be sintered at relatively low temperatures, whereby the polymorph of the zirconia ceramics can be finer, and zirconia ceramics having more highly desirable mechanical features can be obtained. In this case, the amount of yttria in the whole solid solution may be 1.5 - 5 mol% and the amount of calcia may be 4 - 9 mol%. Moreover, yttria and calcia may be used together within the above ranges.

Next, a more detailed and more preferred manufacturing method of zirconia ceramics to be used in the present invention is described hereunder together with a method of manufacturing the cutting blade.

First, a zirconium oxychloride having a high purity of not less than 99.9%, and yttrium chloride and/or calcium chloride having a purity of not less than 99.5% are mixed so as to provide the desired amount of yttria and/or calcia (to be described later) as aforementioned, and whereby an aqueous solution is made.

Next, the aqueous solution is gradually heated to about 150°C, the water is evaporated by keeping the solution at that temperature for an adequate time, and then the solution is heated to about 800 - 1200°C, the temperature being increased at a rate of 50 - 150°C/hour and the material is calcined by maintaining this temperature for several hours. After that, the calcined material is wet milled, for example, with a ball mill. In this milling, a ball mill lined with a resin such as a urethane is preferably used so as to prevent impurities from mixing into the calcined material. Thus, a raw material powder is obtained by such calcination and milling, or by repeating them if necessary. In the process of calcination, the zirconium oxychloride changes to a zirconia, the yttrium chloride changes to an yttria and the calcium chloride changes to a calcia respectively, and a raw material powder in which these oxides are contained uniformly in a state of solid solution is obtained.

Next, after the raw material powder is wet blended with a binder such as a polyvinylalcohol, the powder is pelletized and dried by, for example, a spray dryer. The powder is then compacted to a mass of a desirable shape almost having the shape of the cutting blade, by applying a conventional forming method such as rubber pressing, metal mold forming, casting or injection.

Next, the above compact is heated to 1350 -1500°C, the temperature being increased at a rate of 20 -100°C/hour (in the case of wet forming, after a degreasing process), and fired by keeping it at that temperature for several hours. After the firing, the compact is cooled to about 750 - 850°C at a rate of 20 - 180°C/hour and then sintered by furnace cooling. Thus, the zirconia ceramics are obtained. In this case, the yttria and/or the calcia both act as a stabilizer for zirconia.

Next, the sintered body having almost the shape of cutting blade is machined with a grinder etc., and provided with a roundness at a knife edge of the blade and a tool angle, thereby obtaining the cutting blade.

In the above sintering process, if using a so-called Hot Isostatic Process in which the body having almost the shape of a cutting blade is sintered under a pressure of 500 - 2000 kg/cm² and at a temperature of 1200 -1450°C after the body has been fired at 1300 - 1500°C, the cutting blade obtained can have a finer polymorph and more excellent mechanical features.

Moreover, the crystal structure of zirconia ceramics is influenced by various factors, for example purity of raw material, conditions of calcination, grain size of raw material powder, and conditions of heating and cooling. Accordingly, these conditions on manufacturing should be strictly controlled.

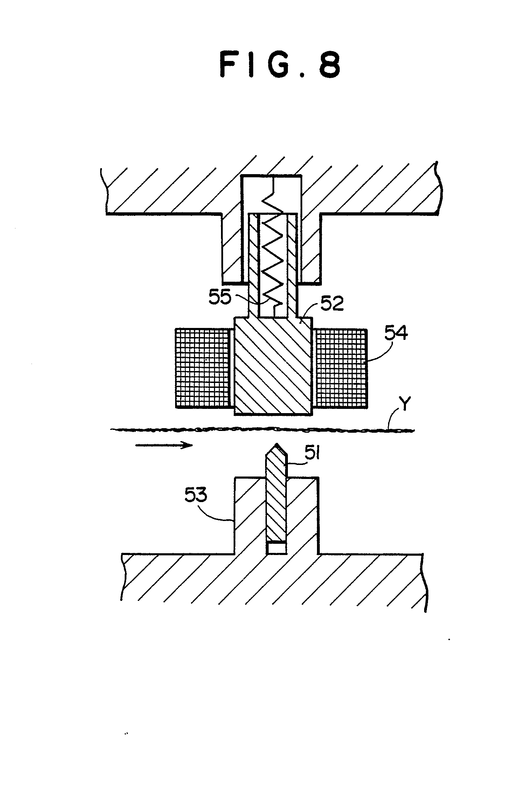

Next, Fig. 8 illustrates a cutting means according to another embodiment of the present invention.

In this embodiment, a cutting blade 51 is fixed to a supporting member 53 and cannot move. On the other hand, a blade receiving member 52 is suspended by a spring 55 in a solenoid 54 of cylindrical form. The blade receiving member 52 is always pulled upward in Fig. 8 by the spring 55, but when the solenoid 54 is switched on by the slub detector, the blade receiving member 52 moves downward and collides with the cutting blade 51. Thus, it may be permitted, in a slub eliminator in accordance with the present invention, for the blade receiving member to be free to slide and the cutting blade to be fixed. In sum, the cutting blade and the blade receiving member may move relative to one another so as to cause the collision or the estrangement therebetween. Other constructions and actions of the embodiment are similar to those of the aforementioned embodiment.

As described in detail above with reference to particular embodiments, since the slub eliminator according to the present invention includes a cutting blade constructed from zirconia ceramics containing at least 50 mol% tetragonal zirconia having excellent mechanical features, particularly strength, toughness, and abrasion resistance and a roundness provided at the knife edge of the blade without providing particularly sharp-edged portions, troubles such as nicking and abrasion of the knife edge can be suppressed even if the cutting blade collides violently with the blade receiving member, the excellent initial sharpness for cutting can be maintained for a long period of time, and the span of life of the cutting blade can be increased. The span of life of the cutting blade is also increased because the zirconia ceramics does not rust on account of it being substantially oxide. Furthermore, since zirconia ceramics do not cause burring when machining the portion around the knife edge as compared with a metal, it can be machined more precisely, and the blade may be provided with an excellent initial sharpness for cutting. For these reasons, in the slub eliminator according to the present invention, the frequency of stopping the machine for exchange of cutting blades can be decreased substantially, and it becomes unnecessary to prepare many cutting blades for such exchange.

The span of life of the aforementioned double sloped type cutting blade which is constructed from zirconia ceramics consisting of substantially only tetragonal zirconia and in which the radius of curvature at the knife edge is 1 mm can be 100 times greater as compared with the conventional cutting blade having the same size and consisting of a high-speed steel.

## Claims

1. A slub eliminator including:

(a) a detecting means (15) for detecting a slub in a running yarn (Y); and

(b) a cutting means (16) for cutting the yarn (Y) in response to a signal from the detecting means (15), the cutting means (16) comprising:

(b-1) a cutting blade (20,40,51) provided on one side of a yarn path of the yarn (Y), at least a cutting edge portion of which blade is constructed from ceramics, the ceramics being a zirconia ceramics containing at least 50 mol% zirconia having a tetragonal crystal structure, the blade having a cutting edge (20a,40a) comprising a rounded portion,

(b-2) a blade receiving member (19,52) provided on the other side of the yarn path so as to oppose the cutting blade (20,40,51), and

(b-2) a drive means (21) for driving at least one of the cutting blade (20,40,51) and the blade receiving member (19,52) relatively to the other so as to cause collision between the cutting blade (20,40,51) and the blade receiving member (19,52) to cut the yarn (Y) or estrangement of the cutting blade (20,40,51) from the blade receiving member (19,52) to allow passage of the yarn (Y) through the slub eliminator.

2. The slub eliminator of claim 1, wherein the detecting means (15) comprises an optical detector including an emitter (17) emitting a light toward the yarn (Y) and a receiver (18) receiving the light from the emitter (17).

3. The slub eliminator of claim 1 or claim 2, wherein at least the cutting edge portion of the blade is of a zirconia ceramics containing not less than 70 mol% zirconia having the tetragonal crystal structure.

4. The slub eliminator of claim 3, wherein the zirconia ceramics contains not less than 90 mol% zirconia having the tetragonal crystal structure.

5. The slub eliminator of claim 4, wherein the zirconia ceramics is a zirconia having substantially only the tetragonal crystal structure.

6. The slub eliminator of any preceding claim, wherein at least the cutting edge portion of the blade is of a zirconia ceramics from which a zirconia having a monoclinic crystal structure is substantially absent.

7. The slub eliminator of any preceding claim, wherein at least the cutting edge portion of the blade is of a zirconia ceramics which has been formed as a solid solution of zirconia with 1.5 - 5 mol% yttria.

8. The slub eliminator of any one of claims 1 to 6, wherein at least the cutting edge portion of the blade is of a zirconia ceramics which has been formed as a solid solution of zirconia with 4 - 9 mol% calcia.

9. The slub eliminator of any one of claims 1 to 6, wherein at least the cutting edge portion of the blade is of a zirconia ceramics comprising a zirconia stabilized with a solid solution of 1.5 - 5 mol% yttria and 4 - 9 mol% calcia.

10. The slub eliminator of any preceding claim, wherein at least the cutting edge portion of the blade is of a zirconia ceramics having a porosity of not greater than 2%.

11. The slub eliminator of claim 10, wherein the zirconia ceramics has a porosity of not greater than 0.5%.

12. The slub eliminator of any preceding claim, wherein at least the cutting edge portion of the blade is of a zirconia ceramics having an average crystal grain size of 0.2 - 1 $\mu$m.

13. The slub eliminator of claim 12, wherein the zirconia ceramics has an average crystal grain size of 0.3 - 0.5 $\mu$m.

14. The slub eliminator of any preceding claim, wherein the thickness of the cutting blade (20,40,51) is 0.3 - 3 mm and the radius of curvature (R) of the rounded portion (20a,40a) of the cutting edge is 0.03 - 2 mm.

15. The slub eliminator of claim 14, wherein the radius of curvature (R) of the rounded portion (20a,40a) of the cutting edge is 0.1 - 1 mm.

16. The slub eliminator of any preceding claim, wherein the cutting blade (20,51) additionally has a first pair of inclined edge portions (20d,20e), the rounded portion (20a) being disposed between and forward of the inclined edge portions (20d,20e) of the said first pair.

17. The slub eliminator of claim 16, wherein the pair of inclined edge portions (20d,20e) together define a tool angle ($\theta_1$) of 20 - 170°.

18. The slub eliminator of claim 17, wherein the tool angle ($\theta_1$) defined by the said first pair of inclined edge portions (20d,20e) is 60 - 120°.

19. The slub eliminator of any one of claims 16 to 18, wherein the cutting blade (20,51) additionally has a second pair of inclined edge portions together defining an angle of run off ($\theta_2$), the rounded portion (20a) and the first pair of inclined edge portions (20d,20e) being disposed between and forward of the second pair of inclined edge portions.

20. The slub eliminator of any preceding claim, wherein the blade receiving member (19,52) is constructed from a mild steel.

21. The slub eliminator of any preceding claim, wherein the blade receiving member (19) is fixed and the drive means (21) is connected to the cutting blade (20,40).

22. The slub eliminator of claim 21, wherein the drive means (21) includes a solenoid (21a) for actuating the cutting blade (20,40) to cause the said collision thereof with the blade receiving member (19) and a spring (23) for urging the cutting blade (20,40) away from the blade receiving member (19) to cause the said estrangement.

23. A cutting blade (20,40,51) for a slub eliminator according to any preceding claim, at least a cutting edge portion of which blade is constructed from ceramics, the ceramics being a zirconia ceramics containing at least 50 mol% zirconia having a tetragonal crystal structure, the blade having a cutting edge (20a,40a) comprising a rounded portion.

# FIG. 1

# F I G. 2

# F I G. 3

F I G . 4

0 253 934

# FIG. 5

```
┌──────────┐      ┌──────────────┐     ┌──────────┐      ┌──────────┐
│   18     │      │     32       │     │   33     │      │   34     │
│ RECEIVER │─────▶│PHOTO-ELECTRIC│────▶│  DELAY   │─────▶│SWITCHING │
│          │      │TRANSFER CIRCUIT│   │ CIRCUIT  │      │ CIRCUIT  │
└──────────┘      └──────────────┘     └──────────┘      └──────────┘
      ▲                                                        │
      ┊                                                        ▼
┌──────────┐                                            ┌──────────┐
│   17     │                                            │   21a    │
│ EMITTER  │                                            │ SOLENOID │
└──────────┘                                            └──────────┘
                                                              ▲
                                                        ┌──────────┐
                                                        │   35     │
                                                        │  POWER   │
                                                        │ CIRCUIT  │
                                                        └──────────┘
```

# FIG. 6            FIG. 7

# FIG. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 335 476 (T.E. PITTS et al.) <br> * Claims; figures * | 1,3-6, 23 | B 65 H 63/06 <br> C 04 B 35/48 |
| Y | JAPANESE PATENTS GAZETTE, vol. 8344, section J5-L, 14th December 1983, page 2, abstract no. 83-803596/44, Derwent Publications, London, GB; & JP-A-58 071 095 (TORAY IND. INC.) 27-04-1983 | 1,3-6, 23 | |
| A | JAPANESE PATENTS GAZETTE, vol. 8433, section J5-F, 26th September 1984, page 15, abstract no. 84-204942/33, Derwent Publications Ltd, London, GB; & JP-A-59 118 395 (TORAY IND. INC.) 09-07-1984 | 1,16-19 | |
| A | GB-A-2 025 473 (AHMEDABAD TEXTILE INDUSTRY'S RESEARCH ASSOCIATION) <br> * Whole document * | 1,2 | |
| A | DE-A-2 602 465 (W. SCHLAFHORST & CO.) <br> * Whole document * | 1,2 | |
| | --- -/- | | |

TECHNICAL FIELDS SEARCHED (Int. Cl.4)

B 65 H 63/00
B 65 H 54/00
B 26 D 1/00
C 04 B 35/00

The present search report has been drawn up for all claims

| Place of search | Date of completion of the search | Examiner |
|---|---|---|
| THE HAGUE | 23-03-1987 | RAYBOULD B.D.J. |

| Category | Citation of document with indication, where appropriate, of relevant passages | Relevant to claim | CLASSIFICATION OF THE APPLICATION (Int. Cl.4) |
|---|---|---|---|
| A | JAPANESE PATENTS GAZETTE, vol. E/33, section J5-L, 29th September 1982, page 19, abstract no. 82-69322E/33, Derwent Publications Ltd, London, GB; & JP-A-57 111 278 (TORAY IND. INC.) 10-07-1982 | 1,7-9 | |
| | --- | | |
| A | EP-A-0 113 942 (TORAY INDUSTRIES INC.) * Claims; figure 2 * | 1 | |
| | ----- | | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 23-03-1987 | RAYBOULD B.D.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82